(19)

**Europäisches Patentamt**
**European Patent Office**
**Office européen des brevets**

(11) **EP 3 714 529 B1**

(12) **EUROPEAN PATENT SPECIFICATION**

(45) Date of publication and mention
of the grant of the patent:
**28.09.2022 Bulletin 2022/39**

(21) Application number: **17933145.9**

(22) Date of filing: **21.11.2017**

(51) International Patent Classification (IPC):
*H02K 7/02* (2006.01)  *H02K 7/04* (2006.01)
*H02K 7/09* (2006.01)  *F16C 32/04* (2006.01)
*F16F 15/315* (2006.01)  *H02J 3/30* (2006.01)

(52) Cooperative Patent Classification (CPC):
**F16C 32/0463; F16C 32/047; F16C 32/048;**
**F16C 32/0493; H02K 7/09;** F16C 32/0451;
F16C 2361/55; F16C 2380/28; H02K 7/025;
Y02P 80/30

(86) International application number:
**PCT/FI2017/050803**

(87) International publication number:
**WO 2019/102060 (31.05.2019 Gazette 2019/22)**

(54) **APPARATUS AND METHOD FOR MULTIPLE AXIS STABILIZATION OF HUBLESS ROTORS**

VORRICHTUNG UND VERFAHREN ZUR MEHRACHSIGEN STABILISIERUNG VON NABENLOSEN
ROTOREN

APPAREIL ET PROCÉDÉ DE STABILISATION SUR AXES MULTIPLES DE ROTORS SANS MOYEU

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**30.09.2020 Bulletin 2020/40**

(73) Proprietor: **Teraloop OY**
**02130 Espoo (FI)**

(72) Inventors:
• **DENTON, Ian**
**00220 Helsinki (FI)**
• **MERILÄ, Markus Olavi Johannes**
**00210 Helsinki (FI)**
• **PÖLLÄNEN, Juuso Oskari**
**00550 Helsinki (FI)**
• **TANWEER KAZMI, Syed Husnain**
**02150 Espoo (FI)**
• **ULLAH KHAN, Saif**
**02150 Espoo (FI)**
• **NYBERG, Timo**
**02130 Espoo (FI)**

(74) Representative: **Papula Oy**
**P.O. Box 981**
**00101 Helsinki (FI)**

(56) References cited:
**WO-A1-97/07340**  **WO-A1-2013/170322**
**US-A- 4 077 678**  **US-A- 6 130 494**
**US-A1- 2003 192 449**  **US-A1- 2003 192 449**
**US-A1- 2003 217 668**  **US-B1- 9 787 156**
**US-B1- 9 787 156**

• **ALEXEI FILATOV ET AL: "Homopolar**
**Permanent-Magnet-Biased Actuators and Their**
**Application in Rotational Active Magnetic**
**Bearing Systems", ACTUATORS, vol. 5, no. 4, 16**
**December 2016 (2016-12-16), page 26,**
**XP055614377, DOI: 10.3390/act5040026**
• **FILATOV, A. et al.: "Homopolar**
**Permanent-Magnet-Biased Actuators and Their**
**Application in Rotational Active Magnetic**
**Bearing Systems", Actuators, vol. 5, no. 4 16**
**December 2016 (2016-12-16), pages 1-10,**
**XP055614377, Basel , Switzerland : MDPI AG**
**ISSN: 2076-0825 Retrieved from the Internet:**
**URL:http://www.mdpi.com/2076-0825/5/4/26/h**
**tm [retrieved on 2018-03-07]**

## Description

Apparatus and method for multiple axis stabilization of hubless rotors.

## Technical Field

The invention pertains to rotor stabilization in motors and generators. Specifically the active magnetic stabilization of rotors in motors and generators where the rotor has no central shaft or hub.

## Background

In motors and generators, magnetic bearings may be utilized in order to support, levitate or stabilize the rotor inside the stator by exerting magnetic force on the rotor. The magnetic force may be generated with magnetic bearings involving permanent magnets, electromagnets, or combinations thereof. Magnetic bearings involving electromagnets may be referred to as active magnetic bearings (AMBs). Conventional in-plane (radial) stabilization of the rotor by AMBs is typically achieved with multiple electromagnets magnetically connected by a common core surrounding the rotor. The electromagnets may then be utilized in a four quadrant xy plane so to control the radial position of rotor.

US 2003/0192449 A1 discloses an energy storage ring with a stationary core according to the preamble of claim 1. US 9787156 B1 discloses a system for storing electrical energy including a ring for storing kinetic energy of rotation, an assembly control system, and at least two motors/generators. WO 97/07341 A1 discloses a radial active magnetic bearing device and process for operating it.

## Summary of Invention

The objective of this invention is to overcome the shortcomings of traditional active magnetic stabilization apparatuses when scaling up the size and speed of motor and generator, particularly in rotating kinetic energy storage devices.

This is achieved with an electromagnetic actuator apparatus for the in-plane stabilization of rotors in motors and generators according to claim 1 and comprising an: actuator target mounted on a hubless ring shaped rotor having a rotational axis; a multitude of modular radially opposed groups of one or more electromagnetic bearing assemblies not connected by a common core and distributed along the circumference of the rotor at fixed distances from each other, the assemblies thereof being both oriented toward the actuator target mounted on the rotor, and separated from the rotor by radial gaps, the radially opposed groups thereof acting in at least two magnetically isolated control axis for the stabilization of the corresponding arc sections of the rotor.

The focus of this invention is also the aforementioned electromagnetic actuator apparatus for rotors in motors and generators wherein the electromagnetic bearing assemblies further comprise a linear movement apparatus being moveable individually in either a radial direction, an axial direction or in any other possible direction.

The focus of this invention is also a method of electromagnetic radial support of rotors in motors and generators according to claim 4. A multitude of modular electromagnetic bearing assemblies not connected by a common core and acting in radially opposed groups for the stabilization of the corresponding arc sections of the rotor, the radially opposed groups thereof acting in at least two magnetically isolated control axis for the stabilization of the corresponding arc sections of the rotor are actuated through a linear movement apparatus being moveable individually in either a radial direction, an axial direction or in any other possible direction.

For both the apparatus and the method, each of the electromagnetic bearing assemblies thereof comprises: a multitude of spaced radial electromagnetic poles facing the rotor and configured to induce electromagnetic flux with the actuator target mounted on the rotor, a bias winding coil both wound around each of the electromagnetic poles of a single electromagnetic bearing assembly and connecting each of the electromagnetic bearing assemblies together, and a control winding coil wound around each of the electromagnetic poles of a single electromagnetic bearing assembly, the winding being in the opposite direction of its radially opposed electromagnetic bearing assembly.

## Brief Description of Drawings

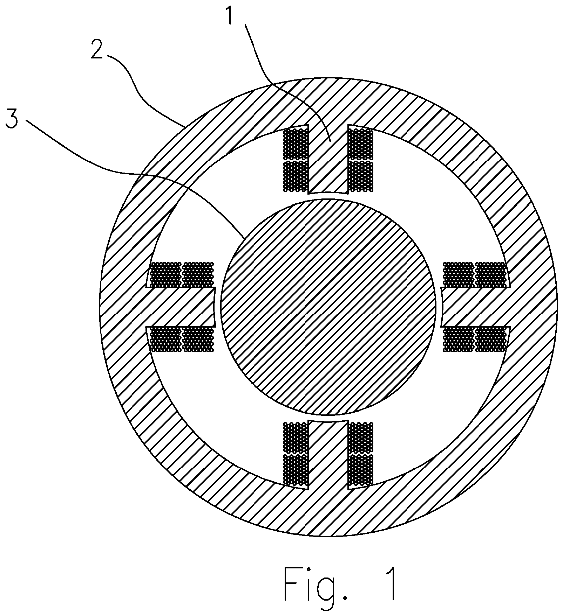

[Fig. 1] Illustrates a plan view of the general apparatus arrangement of a typical active magnetic bearing apparatus. In this figure, the active magnetic bearing cores (1) are connected by a yoke (2) so to form a continuous structure. Further, the actuator cores (1) are oriented inwards towards the actuator target on the rotor (3).

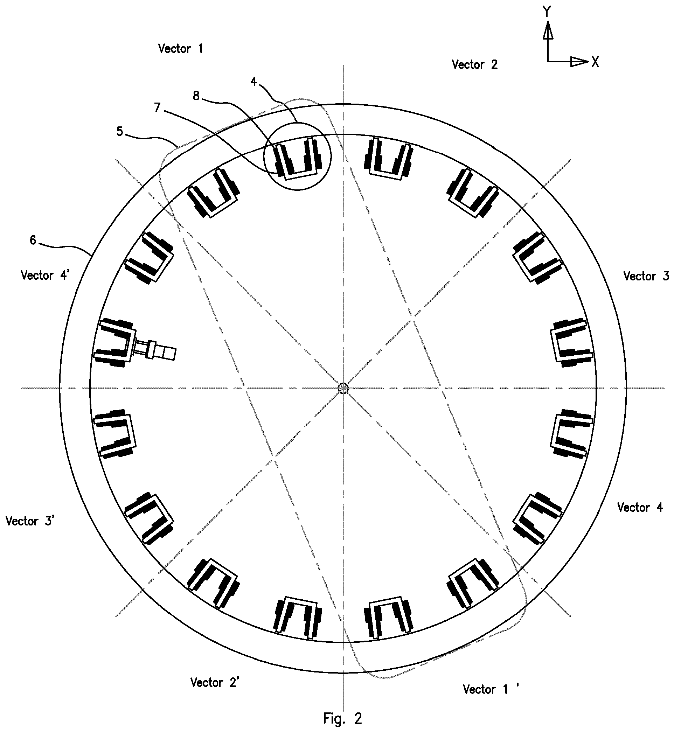

[Fig. 2] Illustrates a plan view of an example embodiment of the electromagnetic actuator apparatus as described in claims 1 and 2. Without limiting the scope of this invention, the example configuration of this figure illustrates the apparatus comprising four magnetically isolated control axis (5). In this figure, the electromagnetic bearing assemblies (4) of the example single force axis (5) are divided into two radially opposing groups of two active electromagnetic bearing assemblies (4) each. Those modular active electromagnetic bearing assemblies (4) could then operate in radially opposed groups where an addition in the electromagnetic force on one group results in the deduction of the same force from its opposing counterpart. For this exemplary configuration, the total number of electromagnetic bearing assemblies (4) for stabilization would be sixteen. For the purpose of this example, the active magnetic bearing apparatus is implemented in heteropolar configuration. In this figure, the actuator target is mounted on the ring shaped rotor (6). The multitude of modular radially opposed groups of electromagnetic bearing assemblies do not form a common core, the cores are instead segmented. Those radially opposed groups act in groups for the stabilization of the corresponding arc sections of the rotor (6) for radial support of the rotor (6). The electromagnetic bearing assemblies (4) are distributed along the circumference of the rotor (6) at fixed distances from each other, they are further both oriented towards the actuator target mounted on the rotor (6), and separated from the rotor (6) by radial gaps. Each electromagnetic bearing assemblies (4) comprise a multitude of spaced radial electromagnetic poles facing the rotor (6) and configured to induce electromagnetic flux with the actuator target mounted on the rotor, and; a base winding coil (7) both wound around each electromagnetic poles of a single electromagnetic bearing assembly (4) and connecting each electromagnetic bearing assemblies(4) together, and; a control winding coil (8) wound around each electromagnetic poles of a single electromagnetic bearing assembly (4), the winding being in the opposite direction of its radially opposed electromagnetic bearing assembly (4). Note that although this is not exemplified in the drawing, the modular electromagnetic bearing assemblies can be alternatively situated inside, outside, above or below the rotor or in any combination of the aforementioned configurations, so long as they are facing the rotor.

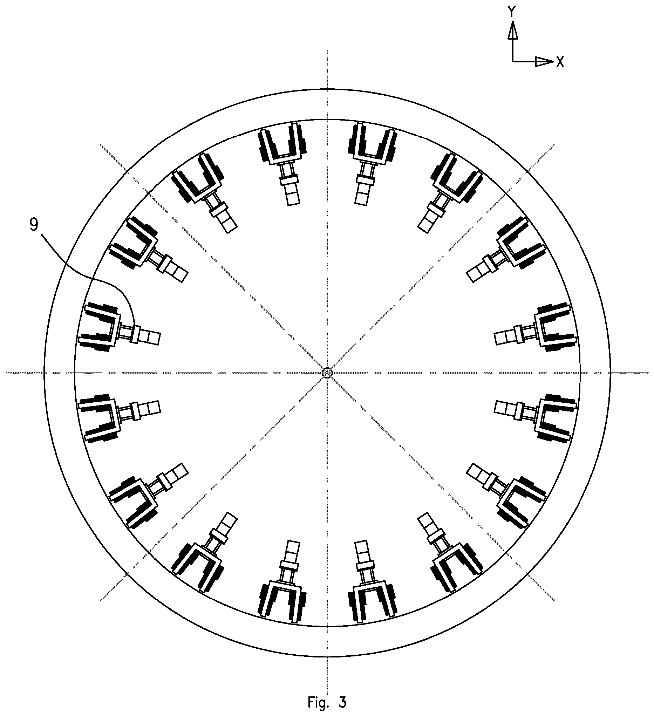

[Fig. 3] Illustrates a plan view of an example embodiment of the electromagnetic actuator apparatus as described in claims 3 and 4, utilising the same exemplary configuration as in Fig. 2. In this figure, the stator core is mounted on a linear movement apparatus (9).

**Description of Embodiments**

The following description is not intended to limit the scope or applicability of the invention in any way. Rather, the following description is intended to provide convenient illustrations for implementing various embodiments of the invention. As will become apparent, various changes can be made to the methods, structures, devices, apparatuses, components, and compositions described in these embodiments without departing from the scope of the invention as defined in the appended claims.

It is disclosed in this patent a novel active magnetic bearing apparatus for the position control of ring shaped rotors in motors and generators.

For the purpose of this invention, the stabilization apparatus is implemented as an actuator target mounted on a hubless ring shaped rotor (6) having a rotational axis; a multitude of modular radially opposed groups of one or more electromagnetic bearing assemblies (4) not connected by a common core and distributed along the circumference of the rotor (6) at fixed distances from each other, the assemblies thereof being both oriented toward the actuator target mounted on the rotor (6), and separated from the rotor (6) by radial gaps, the radially opposed groups thereof acting in at least two magnetically isolated control axis for the stabilization of the corresponding arc sections of the rotor (6), each electromagnetic bearing assemblies (4) thereof comprising: a multitude of spaced radial electromagnetic poles facing the rotor (6) and configured to induce electromagnetic flux with the actuator target mounted on the rotor (6), and; a bias winding coil (7) both wound around each electromagnetic poles of a single electromagnetic bearing assembly (4) and connecting each electromagnetic bearing assemblies (4) together, and; a control winding coil (8) wound around each electromagnetic poles of a single electromagnetic bearing assembly (4), the winding being in the opposite direction of its radially opposed electromagnetic bearing assembly (4).

Increasing the number of axes decreases the overall inductance of an axis. This increases the bandwidth of the power electronics which means that the current can be changed much faster in the control coils thus increasing the capability of stabilizing the rotor when it is subject to large disturbances or vibrations.

For the purpose of this invention, although the stabilization apparatus is implemented for radial support of the rotor (6), the apparatus can also be used for stabilization in the Z-axis with electromagnets (4) on top or bottom of the rotor (6).

For the purpose of this invention, it may be preferable to design the apparatus for stabilization in either one or more planes depending on the size and shape of the rotor (6).

For the purpose of this invention, the active electromagnetic assemblies (4), not connected with a common core, act in modular groups of oppositely facing groups stabilizing an arc section of the rotor (6). This topology enables the freedom to choose the desired number of electromagnets (4) depending on the size of the machine. The modularity of the system eliminates the need to define complex maintenance procedures which are required in case of system failures. For example in case of an inter lamination fault in the actuator apparatus or conduction insulation failures, only the particular faulty active magnetic assembly (4) is replaced and not the whole apparatus. The apparatus can be transported in parts and assembled on site. The modularity also reduces material wastage and size of the tools thus directly reducing the manufacturing costs.

Without limiting the scope of this invention, an example configuration for a stabilization apparatus could consist of four active electromagnetic bearing assemblies (4) for a single axis (5) which are divided into two radially opposing groups of two active electromagnetic bearing assemblies (4) each. Those modular active electromagnetic bearing assemblies (4) could then operate in radially opposed groups where an addition in the electromagnetic force on one group results in the deduction of the same force from its opposing counterpart. For this exemplary configuration, the total number of electromagnetic assemblies (4) for stabilization in the XY plane would be sixteen, divided in 4 magnetically isolated axes.

For the purpose of this invention, the active magnetic bearing apparatus can be implemented in either homopolar or heteropolar configuration. In a heteropolar configuration the electromagnetic assemblies (4) are placed such that the polarity seen by the rotor (6) is N-S-S-N-N-S-S-N and so on. However, in this configuration the rotor (6) experiences change in magnetic field polarity as it rotates which results in eddy current and hysteresis losses. The homopolar active magnetic bearing apparatus has low rotational losses because only a single polarity is seen by the rotor during rotation.

For the purpose of this invention, the active magnetic bearing apparatus should be designed so that it can handle the forces which can destabilize the motion of the rotor (6). These forces may be generated for example from the misalignment in the levitation and the attraction between the motor cores and the permanent magnets in the rotor (6). The active magnetic bearing apparatus must have enough force generating capability after overcoming the disturbance forces to keep the rotor (6) stable.

For the purpose of this invention, the force density in the air gaps has been derived from the basic model of a U shaped core with two windings (7) and (8) facing a section of the rotor (6). It forms a magnetic circuit with the section of the rotor (6) it is facing in which magnetic flux flows from one coil into a first air gap, passes through the rotor (6) into a second air gap and then into the second coil. It is assumed that the reluctance of the core path is negligible when compared to the reluctance of the air gap. The electromagnetic force density in a single air gap is given by the following equation,

$$F_m = \frac{B_g^2}{2\mu_0}$$

where,

    Fm = force density in newton per square meter
    Bg = magnetic flux density in the air gap
    $\mu_0$ = magnetic permeability of free space

The electromagnetic force in the air gap between the rotor (6) and the electromagnetic assemblies (4) is varied by controlling the current in the windings (7) and (8). The controller ensures that the net electromagnetic force in the air gaps between the opposing electromagnetic assemblies (4) and the rotor (6) is zero. This is realized with the help of a cascaded control apparatus which controls the position of the rotor by controlling the current flowing through the actuator coils (7) and (8).

The cascaded controller has two controllers.

    1. Position controller (PID controller)
    2. Current controller (PI controller)

The position controller based on the difference between the desired and measured position generates a reference signal for the current controller. This signal is then compared with the measured current in the control coil (8). Based on the difference between reference and the measured current the current controller decides the duty cycle of the pulse width modulated (PWM) current waveform which is used to drive the gates of the active magnetic bearing power electronics inverters.

The active magnetic bearing power electronics should have enough bandwidth to vary the maximum control current. Mathematically,

$$\omega_{BW} = \frac{ln9U_{DC}}{L_{axis}I_{max}}$$

where,

    $\omega_{BW}$= bandwidth of the power electronics in rad/s
    $U_{DC}$= maximum dc-link voltage in volts
    $L_{axis}$= inductance of control windings for a single axis (8 U-cores in Fig 1)
    $I_{max}$= maximum control current

The apparatus bandwidth can be increased by increasing the dc-link voltage. But a higher dc-link voltage increases the overall cost of the apparatus because better insulation and safety measures are needed. One other solution can be the limitation of control current. It increases the apparatus bandwidth but limits the generated electromagnetic force.

Controlling the inductance of the active magnetic bearing coils (7) and (8) is a good option to have sufficient power electronics bandwidth. Ideally, the apparatus should have a constant inductance around the circumference of the rotor (6). One method by which this can achieved is by mounting the active magnetic bearing cores on motor operated linear slides (9) to vary the air gap because of the inverse relationship between the airgap and inductance.

In order to cope with rotor (6) expansion and to maintain the net change in inductance in a single axis at zero the stabilization apparatus can have U-cores on the outside of the rotor (6). In case of ring expansion the gap on the inside would increase but at the same time it would decrease on the outside thus keeping the net change in inductance minimum.

**Industrial Applicability**

The disclosed invention is key to the deployment of scalable electric motor or generators utilizing hubless ring shaped rotors such as flywheel energy storage devices: when the diameter and speed of the device reaches certain thresholds, especially in cases where the rotor is not located on a central shaft or hub.

**Patent Literature**

The most relevant technologies and literature to the disclosed invention are listed below:

US 5300843 A (General Electric Company), 5 Apr. 1994.
US 5578880 A (General Electric Company), 26 Nov. 1996.
US 9559565 B2 (Calnetix Technologies Inc.), 31 Jan. 2017.
US 20100090556 A1, (Calnetix Technologies Inc.), 15 Apr. 2010.
US 6727617 B2 (Calnetix Technologies Inc.), 27 Apr. 2004.
US 6700258 B2 (Calnetix Technologies Inc.), 2 Mar. 2004.
US 9531236 B2 (Calnetix Technologies Inc.), 27 Dec. 2016.
US 20110101905 A1 (Calnetix Technologies Inc), 5 May 2011.
"Magnetic Bearings- Theory, Design and Application to Rotating Machinery" by Gerhard Schweitzer.
"Mechanical design and analysis of modular active magnetic bearing test rig" by Eerik Sikanen, Lappeenranta University of Technology (LUT) 2014.
"Design, construction and modelling of a flexible rotor AMB test rig" by S.E. Mushi 2012.
"Design and control of active magnetic bearing systems for high speed rotation" by R. Larsonneur 1990.
"Identification and automated controller design of active magnetic bearing systems" by F.Lösch 2002.
"Sliding mode output feedback control of a flexible rotor supported by magnetic bearings" by A.S.Lewis Pennsylvania State University 1999.
"Variable structure control- A survey", 1993.
"Control of flexible rotors supported by active magnetic bearings" by Hiroyuki Fujiwara 2002.
"Decentralized control of magnetic rotor bearing systems" by Hannes Bleuler 1984.
"Active control of radial rotor vibrations" by Kari Tammi 2007.
"Magnetic bearing control systems and adaptive force balancing" by B.Shafai 1994.
"Adaptive auto centering control for an active magnetic bearing supporting a rotor with unknown mass imbalance", 1996.
"Rotor dynamics research of the composite flywheel spin test system: modelling and simulation", 2016.

**Claims**

1. An electromagnetic actuator apparatus for rotors in motors and generators comprising:

   - an actuator target mounted on a hubless ring shaped rotor (6) having a rotational axis;
   - a multitude of modular radially opposed groups of one or more electromagnetic bearing assemblies (4) distributed along the circumference of the rotor (6) at fixed distances from each other, the assemblies thereof being both oriented toward the actuator target mounted on the rotor (6), and separated from the rotor (6) by radial gaps;

   **characterized in that:**

   - the multitude of modular radially opposed groups of one or more electromagnetic bearing assemblies (4) are not connected by a common core;
   - the radially opposed groups thereof are acting in at least two magnetically isolated control axes for the stabilization of the corresponding arc sections of the rotor (6); and
   - each of the electromagnetic bearing assemblies (4) thereof comprises:

     o a multitude of spaced radial electromagnetic poles facing the rotor and configured to induce electromagnetic flux with the actuator target mounted on the rotor,
     o a bias winding coil (7) both wound around each of the electromagnetic poles of a single electromagnetic bearing assembly (4) and connecting each of the electromagnetic bearing assemblies (4) together, and
     o a control winding coil (8) wound around each of the electromagnetic poles of a single electromagnetic bearing assembly (4), the winding being in the opposite direction of its radially opposed electromagnetic bearing assembly (4).

2. An apparatus according to claim 1, wherein the modular electromagnetic bearing assemblies (4) can be alternatively situated inside, outside, above or below the rotor (6) or in any combination of the aforementioned configurations, so long as they are facing the rotor (6).

3. An apparatus according to claim 1 or 2 comprising a linear movement apparatus (9) being moveable individually.

4. A method of electromagnetic radial support of rotors in motors and generators **characterized in that**:

- a multitude of modular electromagnetic bearing assemblies (4) not connected by a common core (4) and acting in radially opposed groups for the stabilization of the corresponding arc sections of a hubless ring shaped rotor (6), the radially opposed groups thereof acting in at least two magnetically isolated control axes for the stabilization of the corresponding arc sections of the rotor (6), are actuated through a linear movement apparatus (9) being moveable individually; and

- each of the electromagnetic bearing assemblies (4) thereof comprises:

o a multitude of spaced radial electromagnetic poles facing the rotor and configured to induce electromagnetic flux with an actuator target mounted on the rotor,

o a bias winding coil (7) both wound around each of the electromagnetic poles of a single electromagnetic bearing assembly (4) and connecting each of the electromagnetic bearing assemblies (4) together, and

o a control winding coil (8) wound around each of the electromagnetic poles of a single electromagnetic bearing assembly (4), the winding being in the opposite direction of its radially opposed electromagnetic bearing assembly (4).

5. A method according to claim 4, wherein the modular electromagnetic bearing assemblies (4) can be actuated so to maintain constant air gaps with the rotor (6).

6. A method according to claims 4 and 5, wherein the modular electromagnetic bearing assemblies (4) can be actuated so to vary their inductance with the actuator target on the rotor (6).

7. A method according to claims 4 to 6, wherein the modular electromagnetic bearing assemblies (4) can be actuated so to obtain different air gaps between their different groups of radially opposed electromagnetic bearing assemblies (4).

**Patentansprüche**

1. Elektromagnetische Stellvorrichtung für Rotoren in Motoren und Generatoren, die Folgendes aufweist:

- ein Stellziel, das auf einem nabenlosen, ringförmigen Rotor (6) mit einer Rotationsachse montiert ist;
- eine Vielzahl modularer, radial gegenüberliegender Gruppen von einer oder mehreren elektromagnetischen Lagerbaugruppen (4), die entlang des Umfangs des Rotors (6) in festen Abständen voneinander verteilt sind, wobei die Baugruppen sowohl in Richtung des Stellziels ausgerichtet sind, das auf dem Rotor (6) montiert ist, als auch von dem Rotor (6) durch radiale Spalte getrennt sind;

**dadurch gekennzeichnet, dass:**

- die Vielzahl der modularen, radial gegenüberliegenden Gruppen einer oder mehrerer elektromagnetischer Lagerbaugruppen (4) nicht durch einen gemeinsamen Kern verbunden sind;
- deren radial gegenüberliegende Gruppen in mindestens zwei magnetisch isolierten Steuerachsen zur Stabilisierung der entsprechenden Bogenabschnitte des Rotors (6) wirken; und
- jede von deren elektromagnetischen Lagerbaugruppen (4) Folgendes aufweist:

eine Vielzahl von beabstandeten radialen elektromagnetischen Polen, die dem Rotor zugewandt und so ausgestaltet sind, dass sie einen elektromagnetischen Fluss mit dem Stellziel induzieren, das auf dem Rotor montiert ist,

eine Vorspannungswicklungsspule (7), die sowohl um jeden der elektromagnetischen Pole einer einzelnen elektromagnetischen Lagerbaugruppe (4) gewickelt ist als auch jede der elektromagnetischen Lagerbaugruppen (4) miteinander verbindet, und

eine Steuerwicklungsspule (8), die um jeden der elektromagnetischen Pole einer einzelnen elektromagnetischen Lagerbaugruppe (4) gewickelt ist, wobei die Wicklung in der entgegengesetzten Richtung ihrer radial gegenüberliegenden elektromagnetischen Lagerbaugruppe (4) verläuft.

2. Vorrichtung nach Anspruch 1, wobei die modularen elektromagnetischen Lagerbaugruppen (4) alternativ innerhalb, außerhalb, oberhalb oder unterhalb des Rotors (6) oder in einer beliebigen Kombination der vorgenannten Ausgestaltungen angeordnet sein können, solange sie dem Rotor (6) zugewandt sind.

3. Vorrichtung nach Anspruch 1 oder 2, die eine lineare Bewegungsvorrichtung (9) aufweist, die einzeln beweglich ist.

4. Verfahren zur elektromagnetischen Radiallagerung von Rotoren in Motoren und Generatoren, **dadurch gekennzeichnet, dass**:

- eine Vielzahl von modularen elektromagnetischen Lagerbaugruppen (4), die nicht durch einen gemeinsamen Kern (4) verbunden sind und in radial gegenüberliegenden Gruppen zur Stabilisierung der entsprechenden Bogenabschnitte eines nabenlosen, ringförmigen Rotors (6) wirken, wobei die radial gegenüberliegenden Gruppen davon in mindestens zwei magnetisch isolierten Steuerachsen zur Stabilisierung der entsprechenden Bogenabschnitte des Rotors (6) wirken, durch eine lineare Bewegungsvorrichtung (9) betätigt werden, die einzeln beweglich ist; und

- jede von deren elektromagnetischen Lagerbaugruppen (4) Folgendes aufweist:

eine Vielzahl von beabstandeten radialen elektromagnetischen Polen, die dem Rotor zugewandt und so ausgestaltet sind, dass sie einen elektromagnetischen Fluss mit einem Stellziel induzieren, das auf dem Rotor montiert ist,

eine Vorspannungswicklungsspule (7), die sowohl um jeden der elektromagnetischen Pole einer einzelnen elektromagnetischen Lagerbaugruppe (4) gewickelt ist als auch jede der elektromagnetischen Lagerbaugruppen (4) miteinander verbindet, und eine Steuerwicklungsspule (8), die um jeden der elektromagnetischen Pole einer einzelnen elektromagnetischen Lagerbaugruppe (4) gewickelt ist, wobei die Wicklung in der entgegengesetzten Richtung ihrer radial gegenüberliegenden elektromagnetischen Lagerbaugruppe (4) ist.

5. Verfahren nach Anspruch 4, bei dem die modularen elektromagnetischen Lagerbaugruppen (4) so betätigt werden können, dass sie konstante Luftspalte mit dem Rotor (6) aufrechterhalten.

6. Verfahren nach den Ansprüchen 4 und 5, bei dem die modularen elektromagnetischen Lagerbaugruppen (4) so betätigt werden können, dass ihre Induktivität mit dem Stellziel auf dem Rotor (6) variiert.

7. Verfahren nach den Ansprüchen 4 bis 6, bei dem die modularen elektromagnetischen Lagerbaugruppen (4) so betätigt werden können, dass unterschiedliche Luftspalte zwischen ihren verschiedenen Gruppen von radial gegenüberliegenden elektromagnetischen Lagerbaugruppen (4) erreicht werden.

**Revendications**

1. Appareil d'actionnement électromagnétique pour des rotors dans des moteurs et des générateurs comprenant :

- une cible d'actionnement montée sur un rotor (6) en forme d'anneau sans moyeu ayant un axe de rotation ;
- une multitude de groupes modulaires opposés radialement d'un ou de plusieurs ensembles porteurs électromagnétiques (4) distribués le long de la circonférence du rotor (6) à des distances fixes les uns des autres, les ensembles des groupes étant à la fois orientés vers la cible d'actionnement montée sur le rotor (6) et séparés du rotor (6) par des entrefers radiaux ;

**caractérisé en ce que** :

- la multitude de groupes modulaires opposés radialement d'un ou de plusieurs ensembles porteurs électromagnétiques (4) ne sont pas reliés par un noyau commun ;
- les groupes radialement opposés de la multitude de groupes sont en action dans au moins deux axes de commande isolés magnétiquement pour la stabilisation des sections d'arc correspondantes du rotor (6) ; et
- chacun des ensembles porteurs électromagnétiques (4) d'un groupe comprend :

◦ une multitude de pôles électromagnétiques espacés radialement en regard du rotor et configurés pour induire un flux électromagnétique avec la cible d'actionnement montée sur le rotor,
◦ une bobine d'enroulement de polarisation (7) à la fois enroulée autour de chacun des pôles électromagnétiques d'un seul ensemble porteur électromagnétique (4) et reliant ensemble chacun des ensembles porteurs électromagnétiques (4), et
◦ une bobine d'enroulement de commande (8) enroulée autour de chacun des pôles électromagnétiques d'un seul ensemble porteur électromagnétique (4), l'enroulement étant dans le sens opposé de son ensemble porteur électromagnétique (4) radialement opposé.

2. Appareil selon la revendication 1, dans lequel les ensembles porteurs électromagnétiques (4) modulaires peuvent être en variante situés à l'intérieur, à l'extérieur, au-dessus ou au-dessous du rotor (6) ou selon une combinaison quelconque des configurations susmentionnées tant qu'ils sont en regard du rotor (6).

3. Appareil selon la revendication 1 ou 2, comprenant un appareil à déplacement linéaire (9) étant mobile individuellement.

4. Procédé de support radial électromagnétique de rotors dans des moteurs et des générateurs, **caracté-**

**risé en ce que** :

- une multitude d'ensembles porteurs électromagnétiques (4) modulaires non connectés par un noyau commun (4) et agissant dans des groupes radialement opposés pour la stabilisation des sections d'arc correspondantes d'un rotor (6) en forme d'anneau sans moyeu, les groupes radialement opposés des groupes agissant dans au moins deux axes de commande isolés magnétiquement pour la stabilisation des sections d'arc correspondantes du rotor (6), sont actionnés par le biais d'un appareil à déplacement linéaire (9) étant mobile individuellement ; et

- chacun des ensembles porteurs électromagnétiques (4) d'un groupe comprend :

  ◦ une multitude de pôles électromagnétiques radialement espacés en regard du rotor et configurés pour induire un flux électromagnétique avec une cible d'actionnement montée sur le rotor,
  ◦ une bobine d'enroulement de polarisation (7) à la fois enroulée autour de chacun des pôles électromagnétiques d'un seul ensemble porteur électromagnétique (4) et reliant ensemble chacun des ensembles porteurs électromagnétiques (4), et
  ◦ une bobine d'enroulement de commande (8) enroulée autour de chacun des pôles électromagnétiques d'un seul ensemble porteur électromagnétique (4), l'enroulement étant dans le sens opposé de son ensemble porteur électromagnétique (4) radialement opposé.

5. Procédé selon la revendication 4, dans lequel les ensembles porteurs électromagnétiques (4) modulaires peuvent être actionnés de façon à maintenir constants des entrefers avec le rotor (6).

6. Procédé selon les revendications 4 et 5, dans lesquels les ensembles porteurs électromagnétiques (4) modulaires peuvent être actionnés de façon à varier leur inductance avec la cible d'actionnement sur le rotor (6).

7. Procédé selon les revendications 4 à 6, dans lequel les ensembles porteurs électromagnétiques (4) modulaires peuvent être actionnés de façon à obtenir des entrefers différents entre leurs groupes différents d'ensembles porteurs électromagnétiques (4) radialement opposés.

Fig. 1

Fig. 2

Y

X

9

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030192449 A1
- US 9787156 B1
- WO 9707341 A1
- US 5300843 A
- US 5578880 A
- US 9559565 B2
- US 20100090556 A1
- US 6727617 B2
- US 6700258 B2
- US 9531236 B2
- US 20110101905 A1

### Non-patent literature cited in the description

- **GERHARD SCHWEITZER.** *Magnetic Bearings-Theory, Design and Application to Rotating Machinery*
- **EERIK SIKANEN.** Mechanical design and analysis of modular active magnetic bearing test rig. Lappeenranta University of Technology (LUT, 2014
- **S.E. MUSHI.** *Design, construction and modelling of a flexible rotor AMB test rig,* 2012
- **R. LARSONNEUR.** *Design and control of active magnetic bearing systems for high speed rotation,* 1990
- **F.LÖSCH.** *Identification and automated controller design of active magnetic bearing systems,* 2002
- **A.S.LEWIS.** Sliding mode output feedback control of a flexible rotor supported by magnetic bearings. Pennsylvania State University, 1999
- *Variable structure control- A survey,* 1993
- **HIROYUKI FUJIWARA.** *Control of flexible rotors supported by active magnetic bearings,* 2002
- **HANNES BLEULER.** *Decentralized control of magnetic rotor bearing systems,* 1984
- **KARI TAMMI.** *Active control of radial rotor vibrations,* 2007
- **B.SHAFAI.** *Magnetic bearing control systems and adaptive force balancing,* 1994
- *Adaptive auto centering control for an active magnetic bearing supporting a rotor with unknown mass imbalance,* 1996
- *Rotor dynamics research of the composite flywheel spin test system: modelling and simulation,* 2016